(19) **Europäisches Patentamt**
**European Patent Office**
**Office européen des brevets**

(11) **EP 2 578 309 B1**

(12) **EUROPEAN PATENT SPECIFICATION**

(45) Date of publication and mention
of the grant of the patent:
**13.12.2017   Bulletin 2017/50**

(51) Int Cl.:
**B01J 2/16** (2006.01)          **B01J 2/02** (2006.01)

(21) Application number: **10852125.3**

(22) Date of filing: **24.05.2010**

(86) International application number:
**PCT/JP2010/058762**

(87) International publication number:
**WO 2011/148454 (01.12.2011 Gazette 2011/48)**

(54) **GRANULATING METHOD**

GRANULIERVERFAHREN

PROCEDE DE GRANULATION

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**10.04.2013   Bulletin 2013/15**

(73) Proprietors:
• **Incorporated Administrative Agency National
Agriculture And Food Research Organization**
**Tsukuba-shi, Ibaraki 305-8517 (JP)**
• **POKKA SAPPORO FOOD & BEVERAGE LTD.**
**Nagaya-shi**
**Aichi 460-8415 (JP)**

(72) Inventors:
• **SOTOME, ITARU**
**Tsukuba-shi, Ibaraki 305-8642 (JP)**
• **ISOBE, SEIICHIRO**
**Tsukuba-shi, Ibaraki 305-8642 (JP)**
• **KATAGIRI, TAKAO**
**Kitanagoya-shi, Aichi 481-8515 (JP)**
• **INOUE, TAKASHI**
**Kitanagoya-shi, Aichi 481-8515 (JP)**
• **MANO, HIRONOBU**
**Kitanagoya-shi, Aichi 481-8515 (JP)**
• **NIIDA, JOJU**
**Kitanagoya-shi, Aichi 481-8515 (JP)**
• **TAKEUCHI, HIROKAZU**
**Iwata-shi, Shizuoka 437-1205 (JP)**
• **ITOU, TAKESHI**
**Iwata-shi, Shizuoka 437-1205 (JP)**
• **MIZOGUCHI, YUICHIRO**
**Iwata-shi, Shizuoka 437-1205 (JP)**

(74) Representative: **Appleyard Lees IP LLP**
**15 Clare Road**
**Halifax HX1 2HY (GB)**

(56) References cited:
**EP-A1- 1 923 188          WO-A2-00/21654
JP-A- H06 509 496          JP-A- 2000 501 981
JP-A- 2002 294 295          JP-A- 2007 054 679
JP-A- 2009 091 386          US-A- 5 560 896**

**Description**

TECHNICAL FIELD

The present invention relates to a granulating method for granulating powder containing a water-soluble component.

BACKGROUND ART

Conventionally, granulation using water contained in superheated steam is proposed for food and other industries (see Patent Documents 1 and 2). In recent years, superheated steam has been used as a heating medium for food materials. For example, Patent Documents 3 and Non-Patent Document 1 propose heating media used for cooking of food materials, and the heating media is prepared by dispersing fine water droplets in superheated steam.

PRIOR ART DOCUMENT

Patent Documents

   Patent Document 1: Japanese Laid-Open Patent Publication No. 2001-062278
   Patent Document 2: Japanese Laid-Open Patent Publication No. 2007-054679
   Patent Document 3: Japanese Laid-Open Patent Publication No. 2009-091386

Non-Patent Document

Non-Patent Document 1: FOODS & FOOD INGREDIENTS JOURNAL , Vol213,No11,2008,P969-976 US5560896 discloses a granulating method for granulating powder. The process includes spraying an aqueous sodium carbonate solution and a hydrogen peroxide solution on to nuclei in a fluidized bed and evaporating the water.

SUMMARY OF THE INVENTION

Problems that the Invention is to Solve

Granulated products are obtained by drying a granulated substance granulated by adding water. The granulated product thus obtained has higher flowability than the ingredient powder. Under the granulating method including expelling of superheated steam over powder in a flowing state, an increase of the amount of water added to the powder tends to result in an increase of the flowability of the granulated product. However, the higher the amount of water added to the powder, the longer becomes the time required for drying the granulated substance. As a result of this, the production efficiency of the granulated product deteriorates.

The present inventors have found that flowability of the granulated product is improved by granulation using a dispersion element composed of fine water droplets dispersed in superheated steam. The present invention is intended to provide a granulating method and a granulating device that are capable of maintaining the flowability of the granulated product even if the amount of water added to the powder is small.

Means for Solving the Problems

To achieve the foregoing objective, and in accordance with a first aspect of the present invention, a granulating method for granulating powder containing a water-soluble component is provided. The method includes supplying water into a channel upstream of a nozzle and then heating the water in the channel in order to obtain a dispersion element composed of fine water droplets dispersed in superheated steam. The method includes expelling the dispersion element composed of fine water droplets dispersed in superheated steam from a nozzle, and causing the dispersion element to contact the powder in a flowing state to achieve granulation.

In the above granulating method, the mass ratio of the superheated steam contained in the dispersion element is preferably adjusted in the range of 20 to 70% by mass in terms of the mass ratio determined from the theoretical flow rate of the superheated steam expelled from the nozzle and the actual flow rate of water fed to the nozzle.

The above granulating method preferably uses a fluidized bed granulator, a stirring granulator, or a continuous granulator.

The above granulating method preferably uses a fluidized bed granulator or a stirring granulator, and the mass ratio of the superheated steam contained in the dispersion element is preferably adjusted in the range of 23 to 63% by mass in terms of the mass ratio determined from the theoretical flow rate of the superheated steam expelled from the nozzle and the actual flow rate of water fed to the nozzle.

The above granulating method preferably uses a continuous granulator, and the mass ratio of the superheated steam contained in the dispersion element is preferably adjusted in the range of 24 to 68% by mass in terms of the mass ratio determined from the theoretical flow rate of the superheated steam expelled from the nozzle and the actual flow rate of water fed to the nozzle.

In the above granulating method, the dispersion element is preferably generated by a dispersion element generator including the nozzle and a heater for heating the channel for guiding water to the nozzle, the temperature in the channel is preferably from 105 to 150°C, the pressure in the channel is from 0.01 to 0.30 MPa, and the dispersion element is preferably expelled from the nozzle.

EFFECTS OF THE INVENTION

The present invention provides a granulating method that is capable of maintaining flowability even if the amount of water added to the powder is small.

BRIEF DESCRIPTION OF THE DRAWINGS

Fig. 1 is a schematic diagram showing a granulating method according to one embodiment of the present invention; and

Fig. 2 is a schematic diagram showing a measuring device.

MODES FOR CARRYING OUT THE INVENTION

A granulating method according to one embodiment of the present invention will now be described.

The granulating method according to the present embodiment is a method for granulating powder containing water-soluble a component. According to this granulating method, a dispersion element composed of fine water droplets dispersed in superheated steam is expelled from a nozzle, and thus the dispersion element and powder in a flowing state come into contact with one another. The dispersion element is obtained by expelling saturated steam and water in a liquid state from a nozzle simultaneously.

The powder contains a water-soluble component. Therefore, the particles composing the powder are partially swollen or dissolved by water contained in the dispersion element. As a result of this, the water-soluble component works as a binder to form a granulated substance. The powder subjected to the granulating method is not particularly limited as to its use, and may be, for example, those for food, drug, or chemical use.

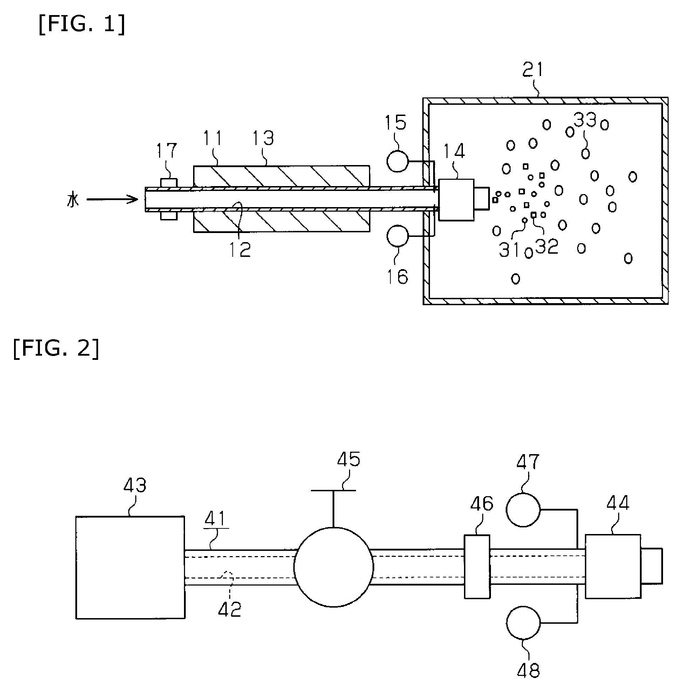

Superheated steam is steam heated to the temperature higher than the boiling point. The dispersion element composed of fine water droplets dispersed in superheated steam can be generated by a dispersion element generator 11 shown in Fig. 1. The dispersion element generator 11 includes a heater 13 for heating a water channel 12 and a nozzle 14 for expelling saturated steam and water in a liquid state simultaneously.

Water is caused to flow into the channel 12 by a metering pump (not shown). The water that has flowed into the channel 12 is heated by the heater 13. As a result of this, the water is partially vaporized to increase the pressure in the channel 12. In other words, saturated steam higher than 100°C and water in a liquid state coexist by appropriately adjusting the amount of water fed into the channel 12 and the temperature in the channel 12. The saturated steam and water in a liquid state are guided by the channel 12 into the nozzle 14, and simultaneously expelled from the nozzle 14. The pressure of the saturated steam expelled from the nozzle 14 instantaneously decreases to the atmospheric pressure, and thus superheated steam 31 having a temperature higher than the boiling point is formed. The water in a liquid state is expelled from the nozzle 14 at a high speed to form fine water droplets 32.

The heating system of the heater 13 is not particularly limited as long as it heats the inside of the channel 12. Examples of the heating system of the heater 13 include conduction heating, emission heating, and high-frequency heating.

The opening of the nozzle 14 is located in a granulator 21. As a result of this, a dispersion element composed of the fine water droplets 32 dispersed in the superheated steam 31 is fed into the granulator 21. At this time, powder 33 is flowing in the granulator 21. Upon contact of the powder 33 with the dispersion element, the powder 33 is partially swollen or dissolved by the water formed by condensation of water in the dispersion element. More specifically, the water in the dispersion element agglutinates the powder 33, whereby a granulated substance is formed. The water fed into the dispersion element generator 11 is preferably soft water or pure water with decreased calcium ion and magnesium ion contents, thereby preventing scaling in the channel 12 and nozzle 14.

The mass ratio of the superheated steam 31 contained in the dispersion element is preferably from 20 to 70% by mass. When the mass ratio is within this range, flowability can be maintained even if the amount of water added to the powder 33 through the dispersion element is small. The mass ratio (S) of the superheated steam 31 is calculated from the theoretical flow rate (G) [g/min] of the superheated steam 31 expelled from the nozzle 14 and the actual flow rate (F) [g/min] of water fed to the nozzle 14, and expressed by the following Formula (1):

$$S \text{ (\% by mass)} = G/F \times 100 \quad (1)$$

The actual flow rate (F) of water fed to the nozzle 14 is measured by a flowmeter 17 shown in Fig. 1.

The theoretical flow rate (G) [g/min] of the superheated steam 31 is defined by the following Formula (2):

$$G = C_d A_2 \frac{P_1}{\sqrt{RT_1}} \sqrt{2 \frac{\kappa}{\kappa - 1} \left\{ 1 - \left( \frac{P_2}{P_1} \right)^{\frac{\kappa-1}{\kappa}} \right\} \left( \frac{P_2}{P_1} \right)^{\frac{1}{\kappa}}} \quad \cdots (2)$$

$A_2$: nozzle opening area [m$^2$]
$P_1$: channel internal pressure [MPa]
$T_1$: channel temperature [K]

The channel internal pressure ($P_1$) and the temperature of the channel ($T_1$) are measured by a manometer 15 and a thermometer 16 provided near the nozzle 14 as shown in Fig. 1.
R: gas constant = 461.5 [J/kg/K]
$\kappa$: ratio of specific heat = 1.34

$P_2$ is critical pressure Pc [MPa], and expressed by the following Formula (3):

$$P_c = P_1 \left( \frac{2}{\kappa + 1} \right)^{\frac{\kappa}{\kappa - 1}} \quad \cdots (3)$$

$C_d$ is calculated by the following Formula (4):

$$C_d = \alpha - \frac{\beta}{\sqrt{Re}} \quad \cdots (4)$$

$\alpha$: nozzle coefficient
$\beta$: nozzle coefficient
Re: Reynolds number = 10$^4$ to 10$^6$

The nozzle coefficients $\alpha$ and $\beta$ result from the value measured in accordance with "Relationship between Coefficient of Discharge of Sonic Nozzle and Gas Type" in Vol. 66, Issue 642, No. 98-1326 (pp. 438-444), Proceedings of The Japan Society of Mechanical Engineers. In the present description, the nozzle coefficients $\alpha$ and $\beta$ are calculated from various actual measurements obtained using air.

Fig. 2 is a schematic view showing the measuring device used for obtaining the nozzle coefficients $\alpha$ and $\beta$. As shown in Fig. 2, air is fed from a compressor 43 into a channel 42 provided in a measuring device 41. The air fed into the channel 42 is guided to a nozzle 44. A valve 45 for adjusting the air flow rate fed into the nozzle 44, and a flowmeter 46 for measuring the air flow rate are provided in the channel 42. In addition, a thermometer 47 for measuring the temperature in the channel 42 and a manometer 48 for measuring the pressure in the channel 42 are provided near the nozzle 44. The nozzle coefficients $\alpha$ and $\beta$ are determined using the measuring device 41 in accordance with the following steps (1) to (5).

<Step (1)>

The air flow rate is adjusted at several to several tens of levels by operation of the valve 45, and the flow rate U', temperature $T_1$, and pressure $P_1$ are measured by the flowmeter 46, thermometer 47, and manometer 48, respectively.

<Step (2)>

The theoretical air flow rate q at each flow rate is calculated by the following Formula (5):

$$q = A_2 \frac{P_1}{\sqrt{RT_1}} \left( \frac{P_2}{P_1} \right)^{\frac{1}{\kappa}} \sqrt{2 \frac{\kappa}{\kappa - 1} \left\{ 1 - \left( \frac{P_2}{P_1} \right)^{\frac{\kappa - 1}{\kappa}} \right\}} \quad \cdots (5)$$

In Formula (5), $T_1$ and $P_1$ are the temperature $T_1$ and pressure $P_1$ measured in <Step (1)>. In Formula (5), $P_2$ is the pressure at the orifice of the nozzle 44, and the pressure $P_2$ is selected higher one from either of the critical pressure force Pc or the atmospheric pressure Pa expressed by Formulae (2) and (3). The gas constant and ratio of specific heat of air are assigned to the R and $\kappa$ in Formula (3):

$$R = 287.10[J/kg/K]$$

$$\kappa = 1.4020$$

<Step (3)>

The ratio u (u = q'/q) of the actual air flow rate q' to the theoretical air flow rate q is calculated for each flow rate. The actual air flow rate q' is the mass flow rate calculated from the volume flow rate measured by the flowmeter 46.

<Step (4)>

For each flow rate, the Reynolds number (Re) is calculated from the following Formula (6):

$$Re = d/(v \times w_2) \quad (6)$$

d: nozzle diameter [m]
v: coefficient of kinematic viscosity of air [$m^2/s$]
$w_2$: air flow velocity [m/s]

The Reynolds number (Re) obtained herein is the Reynolds number of the air flow at the orifice of the nozzle 44.
The coefficient of kinematic viscosity of air (v) is calculated as follows:

$$v = \eta/\rho$$

$\eta$: coefficient of viscosity of air [Pa·s]
The coefficient of viscosity ($\eta$) of air scarcely depends on the temperature and pressure, so that the following constant is used.

$$\eta = 18.58 \times 10^{-6} [Pa·s]$$

p: air density [$kg/m^3$]

The air density (p) is calculated using the temperature $T_1$ and pressure $P_1$ measured in <Step (1)>, and the equation of state of gas. More specifically, the air density (p) is expressed by the following Formula (7):

$$\rho = P_2/(R \times T_2) \qquad (7)$$

The $T_2$ in Formula (7) is calculated from the following Formula (8) for adiabatic expansion:

$$T_2 = T_1 \left( \frac{P_2}{P_1} \right)^{\frac{\kappa - 1}{\kappa}} \qquad \cdots (8)$$

The air flow velocity ($w_2$) in Formula (6) is calculated from the following Formula (9) based on the temperature $T_1$ and pressure $P_1$ measured in <Step (1)>:

$$w_2 = \sqrt{\frac{2\kappa R T_1}{\kappa - 1} \left\{ 1 - \left( \frac{P_2}{P_1} \right)^{\frac{\kappa - 1}{\kappa}} \right\}} \qquad \cdots (9)$$

<Step (5)>

For each flow rate, $1/(Re)^{1/2}$ is plotted on the x axis, and the u is obtained in <Step (3)> on the y axis, and then the nozzle coefficients $\alpha$ and $\beta$ are calculated using the following Formula (10), which is a derivation of Formula (4), as the regression formula.

$$y = \alpha - \beta x (10)$$

The Reynolds number (Re) in Formula (4) is calculated from the pressure and temperature measured by the dispersion element generator 11 shown in Fig. 1. More specifically, the Reynolds number is calculated by the following Formula (11).

$$Re = d/(v \times w_2) \qquad (11)$$

d: nozzle diameter [m]
v: kinematic viscosity coefficient of steam [$m^2/s$]
$w_2$: flow velocity of steam [m/s]

The kinematic viscosity coefficient of steam is calculated from the coefficient of viscosity determined by the measurements obtained by the manometer 15 and thermometer 16, and the density of steam calculated from the equation of state of gas. The flow velocity of steam is calculated using Formula (9).

$P_1$: channel internal pressure [MPa]
$T_1$: channel temperature [K]

The channel internal pressure ($P_1$) and channel temperature ($T_1$) are measured by the manometer 15 and thermometer 16 shown in Fig. 1.

R: gas constant = 461.5 [J/kg/K]
$\kappa$: ratio of specific heat = 1.34

The higher value of the critical pressure Pc [MPa] and the atmospheric pressure Pa calculated by Formula (3) is assigned to $P_2$.

In this manner, the mass ratio (S) of the superheated steam 31 is determined.

In the dispersion element generator 11, the internal pressure of the channel 12 is, for example, from 0.01 to 0.30 MPa, and the temperature of the channel 12 is, for example, from 105 to 150°C. The actual flow rate is, for example, from 10 to 200 g/min. Table 1 shows the specific examples of the mass ratio (S) of the superheated steam 31.

(Table 1)

| Mass ratio of superheated steam S | Nozzle diameter (mm) | Nozzle coefficient | | Actual flow rate (F) | Channel internal temperature (°C) | Channel pressure (MPa) |
|---|---|---|---|---|---|---|
| | | α | β | | | |
| 23% by mass | 1.3 | 1.00 | 3.03 | 70 | 110 | 0.04 |
| 36% by mass | 1.3 | 1.00 | 3.03 | 70 | 120 | 0.10 |
| 41% by mass | 1.0 | 1.00 | 3.03 | 70 | 140 | 0.30 |
| 63% by mass | 1.3 | 1.00 | 3.03 | 70 | 140 | 0.26 |
| 24% by mass | 1.5 | 0.999 | 6.10 | 100 | 110 | 0.05 |
| 33% by mass | 1.5 | 0.999 | 6.10 | 100 | 120 | 0.10 |
| 57% by mass | 1.5 | 0.999 | 6.10 | 100 | 140 | 0.26 |
| 68% by mass | 2.4 | 0.853 | 13.84 | 100 | 120 | 0.10 |

The granulating method may use any commercially available granulator. The granulator used in the granulating method according to the present embodiment is preferably a fluidized bed granulator, a stirring granulator, or a continuous granulator.

Examples of the fluidized bed granulator include a granulator that causes powder to flow by feeding hot air into the granulator from the lower part of the granulator, and a granulator that causes powder to flow by the rolling motion of the container holding the powder. The stirring granulator causes powder to flow by the blade rotation. The continuous granulator continuously feeds the powder as a feedstock into the granulator of, for example, a stirring granulator, and at the same time continuously discharges the formed granulated substance from the granulator. The granulator may be equipped with a vibration generator.

The granulated substance thus obtained is dried to achieve the intended water content. The granulated substance is dried using an ordinary method used for drying a granulated substance. The granulated substance may be dried while being fluidized or without being fluidized. Examples of the dryer for drying the fluidized granulated substance include a fluidized bed dryer and a rotary dryer. Examples of the dryer for drying the granulated substance without fluidizing include a compartment dryer, a flat dryer, and a band dryer. Examples of the heating means in the drying process include hot air heating, conduction heating, radiant heating, and high-frequency heating. Alternatively, the pressure in the dryer may be reduced thereby improving the efficiency in drying of the granulated substance.

The flow characteristics of the dried granulated product may be evaluated by the degree of compression. The degree of compression represents the degree of decrease of the bulk, and is calculated by the following formula:

$$\text{Degree of compression (\%)} = \{(\text{highest bulk density - lowest bulk density})/\text{highest bulk density}\} \times 100$$

The degree of compression may be measured by a commercially available powder tester. The smaller the degree of compression, the better the flowability of the granulated product becomes.

In the granulating method, if either of superheated steam or steam is expelled from the nozzle and at the same time sprayed over the fluidized powder, the degree of compression of the granulated product to be obtained increases as the amount of water added to the powder decreases. In contrast, the granulating method of the present embodiment uses a dispersion element composed of fine water droplets dispersed in superheated steam, so that the degree of compression of the granulated product is prevented from increasing even if the amount of water added to the powder is small. The degree of compression of the granulated product is preferably, for example, 30% or less.

When a stirring granulator or fluidized bed granulator is used, the mass ratio (S) of the superheated steam is preferably from 23 to 63% by mass, from the viewpoint of maintaining the flowability and reducing the variation in the particle size of the granulated substance even when the amount of water added to the powder is reduced.

When a continuous granulator is used, the mass ratio (S) of the superheated steam is preferably from 24 to 68% by mass, from the viewpoint of maintaining the flowability and reducing the variation in the particle size of the granulated substance even when the amount of water added to the powder is reduced.

The advantages achieved by the present embodiment are described below.

(1) According to the granulating method of the present embodiment, a dispersion element composed of fine water droplets in superheated steam is expelled from a nozzle, and thus the dispersion element and powder in a flowing state come into contact with one another. At this time, since the powder contains a water-soluble component, the particles composing the powder are partially swollen or dissolved by the water contained in the dispersion element. As a result of this, the particles agglutinate to form a granulated substance. According to this method, the flowability may be maintained even if the amount of water added to the powder is reduced. Therefore, for example, the time necessary for drying the granulated substance can be reduced.

(2) The mass ratio of the superheated steam contained in the dispersion element is preferably from 20 to 70% by mass. When the mass ratio is within this range, the flowability may be maintained even when the amount of water added to the powder through the dispersion element is small.

(3) The above-described granulating method preferably uses any of a fluidized bed granulator, a stirring granulator, or a continuous granulator. For example, when a fluidized bed granulator or stirring granulator is used, the mass ratio (S) of the superheated steam is preferably from 23 to 63% by mass, thereby enhancing the above-described advantages and reducing the variation in the particle size of the granulated substance. Alternatively, when a continuous granulator is used, the mass ratio (S) of the superheated steam is preferably from 24 to 68% by mass, thereby enhancing the above-described advantages and reducing the variation in the particle size of the granulated substance.

The above-described embodiment may be modified as follows.

A plurality of dispersion element generators may be provided for one granulator, thereby forming the dispersion element at a plurality of locations in the granulator.

Water or warm water that has been adjusted to the predetermined temperature may be fed to the dispersion element generator. The dispersion element generator may be equipped with a plurality of heaters.

In the making of a granulated product, for example, a fluidized bed granulation dryer may be used, thereby continuously carrying out granulation and drying. Alternatively, a granulating drying apparatus equipped with a continuous granulator and a dryer may be used thereby continuously carrying out granulation and drying.

The granulated substance may be dried in a plurality of steps. For example, granulation and preliminary drying are carried out in a fluidized bed granulation dryer, and then the granulated substance thus obtained is dried by a compartment dryer.

Examples

The above-described embodiment is specifically described below with reference to examples and comparative examples.

(Example 1-1)

In Example 1-1, a granulated product was produced from corn soup ingredients in the form of powder. Table 2 shows the proportions of the corn soup ingredients.

(Table 2)

| Ingredient Name | Proportion (% by mass) |
|---|---|
| Corn powder | 20 |
| Starch | 19 |
| Vegetable oil powder | 14 |
| Whey powder | 14 |
| Sugar | 11 |

(continued)

| Ingredient Name | Proportion (% by mass) |
|---|---|
| Maltose | 10 |
| Salt | 6 |
| Powder seasoning | 3 |
| Granulated sugar | 3 |

<Granulation>

The granulator was a stirring granulator (Powrex Corporation, Vertical Granulator FM-VG-01). As shown in Fig. 1, the stirring granulator was equipped with a dispersion element generator.

Firstly, 400 g of the corn soup ingredients was charged into the stirring granulator, and mixed for 30 seconds in the stirring granulator. Secondly, a dispersion element was sprayed over the corn soup ingredients under stirring, thereby starting granulation. The mass ratio (S) of the superheated steam in the dispersion element was adjusted to 23% by mass. The granulation process was finished when the amount of water added through the dispersion element reached 11.6 g for 400 g of the corn soup ingredients.

<Drying>

The granulated substance thus obtained was dried for 19.5 minutes using a tumbling fluidized bed granulation dryer (FD-MP-01E) manufactured by Powrex Corporation, at an air supply rate of 0.12 m$^3$/min and an air supply temperature of 100°C. As a result of the drying, a granulated product having about 3% by mass water content was obtained.

(Example 1-2 and Example 1-3)

In each of Examples 1-2 and 1-3, a granulated product having about 3% by mass water content was obtained in the same manner as in Example 1-1, except that the mass ratio (S) of the superheated steam in the dispersion element was changed to the values shown in Table 3.

(Comparative Example 1-1)

In Comparative Example 1-1, some conditions of Example 1-1 in the granulating process and the drying process were changed to obtain a granulated product. A granulated product having about 3% by mass water content was obtained in the same manner as in Example 1, except the following points: the conditions of the granulating and drying processes were different from those in Example 1-1; in the granulation process, the dispersion element was changed to superheated steam; the granulation process was finished when the amount of water added by the superheated steam reached 14.4 g for 400 g of the corn soup ingredients; and in the drying process, the drying time was extended from 19.5 minutes to 22.5 minutes.

(Comparative Example 1-2)

In Comparative Example 1-2, some conditions of Example 1-1 in the granulating process and the drying process were changed to obtain a granulated product. A granulated product having about 3% by mass water content was obtained in the same manner as in Example 1-1, except the following points: the conditions of the granulating and drying processes were different from those in Example 1-1; in the granulation process, the dispersion element was changed to steam; the granulation process was finished when the amount of water added by the steam reached 16.4 g for 400 g of the corn soup ingredients; and in the drying process, the drying time was extended from 19.5 minutes to 24.5 minutes.

(Evaluation of granulated product)

The granulated products obtained in the respective examples were measured for the degree of compression using powder tester (Hosokawa Micron Group, Model PT-R). Table 3 shows the measurements of the degree of compression.

(Table 3)

|  | Addition form of water | Amount of water added to 400 g of powder (g) | Degree of compression (%) |
|---|---|---|---|
| Example 1-1 | Vapor-liquid mixture S = 23% by mass | 11.6 | 17.1 |
| Example 1-2 | Vapor-liquid mixture S = 36% by mass | 11.6 | 16.4 |
| Example 1-3 | Vapor-liquid mixture S = 63% by mass | 11.6 | 12.3 |
| Comparative Example 1-1 | Superheated steam | 14.4 | 17.0~18.0 |
| Comparative Example 1-2 | Steam | 16.4 | 17.0~18.0 |

Comparative Example

As shown in Table 3, the amount of water added to 400 g of the powder was smaller in examples than that in the comparative examples. However, the degrees of compression in the examples were equivalent to or higher than those in the comparative examples. When the mass ratio (S) of the superheated steam is less than 23% by mass, the particle size of the granulated substance tends to vary. Therefore, the mass ratio (S) of the superheated steam is preferably 23% by mass or more.

(Example 1-4)

In Example 1-4, a granulated product was obtained in the same manner as in Example 1-1, except that the drying after granulation used a compartment dryer in place of the tumbling fluidized bed granulation dryer. The granulated substance after granulation was placed flatly in a thermostat bath as compartment dryer, dried at 60°C for 59.0 minutes, thereby obtaining a granulated product having about 3% by mass water content.

(Comparative Example 1-3)

In Comparative Example 1-3, a granulated product was obtained in the same manner as in Comparative Example 1-1, except that the drying after granulation used a compartment dryer in place of the tumbling fluidized bed granulation dryer. The granulated substance after granulation was placed flatly in a thermostat bath, dried at 60°C for 65.5 minutes, thereby obtaining a granulated product having about 3% by mass water content.

(Comparative Example 1-4)

In Comparative Example 1-4, a granulated product was obtained in the same manner as in Comparative Example 1-2, except that the drying after granulation used a compartment dryer in place of the tumbling fluidized bed granulation dryer. The granulated substance after granulation was placed flatly in a thermostat bath, dried at 60°C for 70.0 minutes, thereby obtaining a granulated product having about 3% by mass water content.

(Comparison of drying time)

Table 4 shows the comparison of the drying time required to obtain a granulated product having about 3% by mass water content from the granulated substance after granulation.

(Table 4)

| | Addition form of water | Type of dryer | Drying time (minute) | Water content of granulated product (% by mass) | Rate of reduction of drying time (%) |
|---|---|---|---|---|---|
| Example 1-1 | Vapor-liquid mixture | Fluidized bed dryer | 19.5 | 3 | 13 |
| Example 1-4 | Vapor-liquid mixture | Compartment dryer | 59.0 | 3 | 10 |
| Comparative Example 1-1 | Superheated steam | Fluidized bed dryer | 22.5 | 3 | 0 (criteria value) |
| Comparative Example 1-3 | Superheated steam | Compartment dryer | 65.5 | 3 | 0 (criteria value) |
| Comparative Example 1-2 | Steam | Fluidized bed dryer | 24.5 | 3 | -9 |
| Comparative Example 1-4 | Steam | Compartment dryer | 70.0 | 3 | -7 |

The results in Table 4 indicate that the drying time after granulation was shorter in the examples than in the comparative examples. The water content of the granulated substances of Examples 1-1 and 1-4 after granulation was about 6% by mass. These results indicate that the drying process after granulation may be omitted when a granulated product having about 6% by mass water content is produced. On the other hand, when the granulated substances of Comparative Examples 1-1 to 1-4 were made into granulated products having about 6% by mass water content, drying for 2.5 minutes or longer was necessary after granulation.

(Example 1-5 and Example 1-6)

In each of Examples 1-5 and 1-6, a granulated product was obtained in the same manner as in Example 1-1, except that the mass ratio (S) of superheated steam in the dispersion element, the amount of water added through the dispersion element, and the drying time were changed to the values shown in Table 5.

(Evaluation of granulated product)

The granulated products thus obtained were measured for the degree of compression in the same manner as above. Table 5 shows the measurements of the degree of compression. Table 5 also shows the channel temperature and channel pressure in the dispersion element generator.

(Table 5)

| | Addition form of water | Amount of water added to 400 g of powder (g) | Channel temperature (°C) | Channel pressure (MPa) | Drying time (minute) | Degree of compression (%) |
|---|---|---|---|---|---|---|
| Example 1-5 | Vapor-liquid mixture S = 54% by mass | 23.2 | 135 | 0.21 | 30.0 | 15.0 |
| Example 1-6 | Vapor-liquid mixture S = 56% by mass | 22.0 | 120 | 0.10 | 29.1 | 15.8 |

As shown in Table 5, the degrees of compression of the granulated products were similar when the mass ratios of superheated steam were substantially the same, even if the channel conditions were changed.

(Example 1-7)

In Example 1-7, granulation was carried out in the same manner as in Example 1-1, except that laundry detergent ingredients as chemicals were used. The laundry detergent ingredients are prepared by crushing commercially available laundry detergent ingredients. In the granulation process, the mass ratio (S) of superheated steam in the dispersion element was set at 36% by mass. The granulation process was finished when the amount of water added through the dispersion element reached 7.2 g for 400 g of the laundry detergent ingredients. The granulated substance thus obtained was dried for 14.0 minutes in the same manner as in Example 1-1, thereby obtaining a granulated product having about 3% by mass water content.

(Example 1-8)

In Example 1-8, granulation was carried out in the same manner as in Example 1-1, except that vitamin preparations as drugs were used. Table 6 shows the proportions of the vitamin preparations.

(Table 6)

| Ingredients name | Proportion (% by mass) |
|---|---|
| Vitamin C | 50 |
| Vitamin B2, B6, amino acid, caffeine-fortified preparation | 5 |
| 5% β-carotene preparation | 4 |
| Dextrin | 41 |

In the granulation process, the mass ratio (S) of superheated steam in the dispersion element was changed to 36% by mass. The granulation process was finished when the amount of water added through the dispersion element reached 8.0g for 400 g of the vitamin preparations ingredients. The granulated substance thus obtained was dried for 15.5 minutes in the same manner as in Example 1-1, thereby obtaining a granulated product having about 3% by mass water content.

(Evaluation of granulated product)

The granulated products of Examples 1-7 and 1-8 were measured for the degree of compression in the same manner as in Example 1-1. Table 7 shows the measurements of the degree of compression.

(Table 7)

| | Addition form of water | Amount of water added to 400 g of powder (g) | Degree of compression (%) |
|---|---|---|---|
| Example 1-7 | Vapor-liquid mixture S = 36% by mass | 7.2 | 6.8 |
| Example 1-8 | Vapor-liquid mixture S = 36% by mass | 8.0 | 12.2 |

As shown in Table 7, granulated products having good flowability were obtained from the chemicals and drugs through the granulation using a dispersion element.

(Example 2-1)

In Example 2-1, a granulated product was made from the corn soup ingredients shown in Example 1-1 using a fluidized bed granulator (Fuji Industrial Co., Ltd., Spray Granulator Model STREA-1).

<Granulation>

As shown in Fig. 1, the fluidized bed granulator was equipped with a dispersion element generator. The air supply temperature in the fluidized bed granulator was set at 90°C, and granulation was carried out at a constant air supply rate. Firstly, 400 g of the corn soup ingredients was charged into the fluidized bed granulator, and mixed for 30 seconds in the fluidized bed granulator. Secondly, a dispersion element was sprayed over the corn soup ingredients in a fluidized state, thereby stating granulation in the fluidized bed granulator. The mass ratio (S) of superheated steam in the dispersion element was set at 63% by mass. The granulation process was finished when the amount of water added through the dispersion element reached 46.8 g for 400 g of the corn soup ingredients.

<Drying>

The granulated substance thus obtained was dried using a tumbling fluidized bed granulation dryer (FD-MP-01E) manufactured by Powrex Corporation under at an air supply rate of 0.12 $m^3$/min and an air supply temperature of 100°C, thereby obtaining a granulated product having about 3% by mass water content.

(Example 2-2)

In Example 2-2, a granulated product was obtained in the same manner as in Example 2-1, except that the drying process after granulation used a compartment dryer in place of the tumbling fluidized bed granulation dryer. The granulated substance after granulation was placed flatly in a thermostat bath, and dried at 60°C, thereby obtaining a granulated product having about 3% by mass water content.

(Example 2-3)

In Example 2-3, a granulated product having about 3% by mass water content was obtained in the same manner as in Example 2-1, except that the mass ratio (S) of superheated steam in the dispersion element, the amount of water added through the dispersion element, and the drying time were changed to the values shown in Table 8.

(Example 2-4)

In Example 2-4, a granulated product was obtained in the same manner as in Example 2-3, except that the drying process after granulation used a compartment dryer in place of the tumbling fluidized bed granulation dryer. The granulated substance after granulation was placed flatly in a thermostat bath, and dried at 60°C, thereby obtaining a granulated product having about 3% by mass water content.

(Example 2-5)

In Example 2-5, a granulated product having about 3% by mass water content was obtained in the same manner as in Example 2-1, except that the mass ratio (S) of superheated steam in the dispersion element, the amount of water added through the dispersion element, and the drying time were changed to the values shown in Table 8.

(Example 2-6)

In Example 2-6, a granulated product was obtained in the same manner as in Example 2-5, except that the drying process after granulation used a compartment dryer in place of the tumbling fluidized bed granulation dryer. The granulated substance after granulation was placed flatly in a thermostat bath, and dried at 60°C, thereby obtaining a granulated product having about 3% by mass water.

(Comparative Example 2-1)

In Comparative Example 2-1, a granulated product having about 3% by mass water content was obtained in the same manner as in Example 2-1, except that the addition form of water, the amount of water added, and the drying time were changed to the values shown in Table 8.

(Comparative Example 2-2)

In Example 2-2, a granulated product was obtained in the same manner as in Comparative Example 2-1, except that the drying process after granulation used a compartment dryer in place of the tumbling fluidized bed granulation dryer. The granulated substance after granulation was placed flatly in a thermostat bath, and dried at 60°C, thereby obtaining a granulated product having about 3% by mass water.

(Comparison of drying time)

Table 8 shows the comparison of the drying times required to obtain a granulated product having about 3% by mass water content from the granulated substance after granulation.

(Table 8)

| | Addition form of water | Amount of water added to 400 g of powder (g) | Type of dryer | Drying time (minute) | Degree of compression (%) | Rate of reduction of drying time (%) |
|---|---|---|---|---|---|---|
| Example 2-1 | Vapor-liquid mixture S = 63% by mass | 46.8 | Fluidized bed dryer | 45.5 | 21.8 | 32 |
| Example 2-2 | Vapor-liquid mixture S = 63% by mass | 46.8 | Compartment dryer | 116.5 | | 29 |
| Example 2-3 | Vapor-liquid mixture S = 36% by mass | 24.4 | Fluidized bed dryer | 31.0 | 25.8 | 54 |
| Example 2-4 | Vapor-liquid mixture S = 36% by mass | 24.4 | Compartment dryer | 84.5 | | 48 |
| Example 2-5 | Vapor-liquid mixture S = 23% by mass | 23.2 | Fluidized bed dryer | 30.0 | 27.0 | 55 |
| Example 2-6 | Vapor-liquid mixture S = 23% by mass | 23.2 | Compartment dryer | 82.5 | | 49 |
| Comparative Example 2-1 | Steam | 93.2 | Fluidized bed dryer | 67.1 | 27.0 | 0 (criteria value) |
| Comparative Example 2-2 | Steam | 93.2 | Compartment dryer | 163.2 | | 0 (criteria value) |

As shown in Table 8, the results for the examples and comparative examples indicate that the degree of compression was maintained in the examples, regardless of the decrease of the amount of water added to the powder, and that the drying time after granulation was shorter in the examples than in the comparative examples. When the addition form of water was superheated steam, the degree of compression of the granulated product obtained was higher than 30%, even though the amount of water added to 400 g of the powder was increased to 218 g.

When the mass ratio (S) of superheated steam is less than 23% by mass, the particle size of the granulated substance tends to vary, so that the mass ratio (S) of superheated steam is preferably 23% by mass or more.

(Examples 2-7 to 2-12, Comparative Example 2-3 and Comparative Example 2-4)

The drying times in Examples 2-7 to 2-12 and Comparative Examples 2-3 and 2-4, were changed from those in Examples 2-1 to 2-6 and Comparative Examples 2-1 and 2-2. More specifically, Examples 2-7 to 2-12 and Comparative Examples 2-3 and 2-4 were carried out in the same manner as Examples 2-1 to 2-6 and Comparative Examples 2-1 and 2-2, respectively, except that the drying time was changed, thereby obtaining a granulated product having about 6% by mass water content.

(Comparison of drying time)

Table 9 shows the comparison of the drying times required to obtain a granulated product having about 6% by mass water content from the granulated substance after granulation.

(Table 9)

|  | Type of dryer | Drying time (minute) | Degree of compression (%) | Rate of reduction of drying time (%) |
|---|---|---|---|---|
| Example 2-7 | Fluidized bed dryer | 25.5 | 21.8 | 46 |
| Example 2-8 | Compartment dryer | 56.5 | | 45 |
| Example 2-9 | Fluidized bed dryer | 11.0 | 25.8 | 77 |
| Example 2-10 | Compartment dryer | 24.5 | | 76 |
| Example 2-11 | Fluidized bed dryer | 10.0 | 27.0 | 79 |
| Example 2-12 | Compartment dryer | 22.5 | | 78 |
| Comparative Example 2-3 | Fluidized bed dryer | 47.1 | 27.0 | 0 (criteria value) |
| Comparative Example 2-4 | Compartment dryer | 103.2 | | 0 (criteria value) |

The results in Table 9 indicate that the drying time after granulation was shorter in the examples than in the comparative examples.

(Example 2-13)

In Example 2-13, granulation was carried out in the same manner as in Example 2-1, except that laundry detergent ingredients as chemicals were used. The laundry detergent ingredients are prepared by crushing commercially available laundry detergent ingredients. In the granulation process, the mass ratio (S) of superheated steam in the dispersion element was set at 36% by mass. The granulation process was finished when the amount of water added through the dispersion element reached 63.0 g for 400 g of the laundry detergent ingredients. The granulated substance thus obtained was dried for 54.0 minutes in the same manner as in Example 2-1, and thus obtaining a granulated product having about 3% by mass water content.

(Example 2-14)

In Example 2-14, granulation was carried out in the same manner as in Example 2-1, except that vitamin preparations as drugs were used. The vitamin preparations were the same as those shown in Table 6. In the granulation process, the mass ratio (S) of superheated steam in the dispersion element was set at 36% by mass. The granulation process was finished when the amount of water added through the dispersion element reached 11.7 g for 400 g of the laundry detergent ingredients. The granulated substance thus obtained was dried for 19.5 minutes in the same manner as in Example 2-1, thereby obtaining a granulated product having about 3% by mass water content.

(Evaluation of granulated product)

The granulated products of Examples 2-13 and 2-14 were measured for the degree of compression in the same manner as above. Table 10 shows the measurements of the degree of compression.

(Table 10)

|  | Addition form of water | Amount of water added to 400 g of powder (g) | Degree of compression (%) |
|---|---|---|---|
| Example 2-13 | Vapor-liquid mixture S = 36 % by mass | 63.0 | 10.6 |
| Example 2-14 | Vapor-liquid mixture S = 36 % by mass | 11.7 | 16.0 |

As shown in Table 10, granulated products having good flowability were obtained from the chemicals and drugs through the granulation using a dispersion element.

(Example 3-1)

In Example 3-1, a granulated product was made from the corn soup ingredients described in Example 1-1 using a continuous granulator (Powrex Corporation, Shugi continuous granulator, FX-100).

<Granulation>

The continuous granulator was equipped with a dispersion element generator. The shaft rotation speed of the continuous granulator was 4500 rpm, and the actual water flow rate in the dispersion element generator was 100 mL/min. The mass ratio (S) of superheated steam in the dispersion element was set at 68% by mass. In the granulation using the continuous granulator, the feed rate of the corn soup ingredients was adjusted, such that 20.4 g of water was added to 400 g the corn soup ingredients.

<Drying>

The granulated substance thus obtained was dried using a tumbling fluidized bed granulation dryer (FD-MP-01E) manufactured by Powrex Corporation, at an air supply rate of 0.12 m$^3$/min and an air supply temperature of 100°C. As a result of the drying, a granulated product having about 3% by mass water content was obtained.

(Example 3-2)

In Example 3-2, a granulated product was obtained in the same manner as in Example 3-1, except that the drying after granulation used a compartment dryer in place of the tumbling fluidized bed granulation dryer. The granulated substance after granulation was placed flatly in a thermostat bath as the compartment dryer, dried at 60°C, thereby obtaining a granulated product having about 3% by mass water content.

(Comparative Example 3-1)

In Comparative Example 3-1, a granulated product having about 3% by mass water content was obtained in the same manner as in Example 3-1, except that the addition form of water, the amount of water added, and the drying time were changed to the values shown in Table 11.

(Comparative Example 3-2)

In Example 3-2, a granulated product was obtained in the same manner as in Comparative Example 3-1, except that the drying after granulation used a compartment dryer in place of the tumbling fluidized bed granulation dryer. The granulated substance after granulation was placed flatly in a thermostat bath as the compartment dryer, dried at 60°C, thereby obtaining a granulated product having about 3% by mass water content.

(Comparison of drying time)

Table 11 shows the comparison of the drying time required to obtain a granulated product having about 3% by mass water content from the granulated substance after granulation.

(Table 11)

| | Addition form of water | Amount of water added to 400 g of powder (g) | Type of dryer | Drying time (minute) | Degree of compression (%) | Rate of reduction of drying time (%) |
|---|---|---|---|---|---|---|
| Example 3-1 | Vapor-liquid mixture S = 68% by mass | 20.4 | Fluidized bed dryer | 27.7 | 17~18 | 6 |
| Example 3-2 | Vapor-liquid mixture S = 68% by mass | 20.4 | Compartment dryer | 77.3 | | 4 |
| Comparative Example 3-1 | Superheated steam | 22.4 | Fluidized bed dryer | 29.4 | | 0 (criteria value) |
| Comparative Example 3-2 | Superheated steam | 22.4 | Compartment dryer | 80.9 | | 0 (criteria value) |

As shown in Table 11, the results for the examples and comparative examples indicate that the degree of compression was maintained in the examples, even though the amount of water added to the powder was small, and that the drying time after granulation was shorter in the examples than in the comparative examples. When the addition form of water was superheated steam, the degree of compression of the granulated product obtained was higher than 19%, even though the amount of water added to 400 g of the powder was increased to 22.4 g.

(Example 3-3, Example 3-4, Comparative Example 3-3 and Comparative Example 3-4)

Examples 3-3 and 3-4, and Comparative Examples 3-3 and 3-4 were carried out in the same manner as Examples 3-1 and 3-2, and Comparative Examples 3-1 and 3-2, respectively, except that the drying time was changed, thereby obtaining a granulated product having about 6% by mass water content.

(Comparison of drying time)

Table 12 shows the comparison of the drying time required to obtain a granulated product having about 6% by mass water content from the granulated substance after granulation.

(Table 12)

| | Type of dryer | Drying time (minute) | Degree of compression (%) | Rate of reduction of drying time (%) |
|---|---|---|---|---|
| Example 3-3 | Fluidized bed dryer | 7.7 | 17~18 | 18 |
| Example 3-4 | Compartment dryer | 17.3 | | 17 |
| Comparative Example 3-3 | Fluidized bed dryer | 9.4 | | 0 (criteria value) |
| Comparative Example 3-4 | Compartment dryer | 20.9 | | 0 (criteria value) |

The results in Table 12 indicate that the drying time after granulation was shorter in the examples than in the comparative examples.

(Example 3-5 to Example 3-7)

In each of Comparative Examples 3-5 to 3-7, a granulated product was obtained in the same manner as in Example 3-1, except that the mass ratio (S) of superheated steam in the dispersion element, the amount of water added through the dispersion element, and the drying time were changed to the values shown in Table 13.

(Evaluation of granulated product)

The granulated products of Examples 3-5 to 3-7 were measured for the degree of compression in the same manner as above. Table 13 shows the measurements of the degree of compression. Table 13 also shows the channel temperature and channel pressure in the dispersion element generator.

(Table 13)

|  | Addition form of water | Amount of water added to 400 g of powder (g) | Channel temperature (°C) | Channel pressure (MPa) | Drying time (minute) | Degree of compression (%) |
|---|---|---|---|---|---|---|
| Example 3-5 | Vapor-liquid mixture S = 57% by mass | 22.4 | 140 | 0.26 | 29.4 | 14.1 |
| Example 3-6 | Vapor-liquid mixture S = 33% by mass | 22.4 | 120 | 0.10 | 29.4 | 13.6 |
| Example 3-7 | Vapor-liquid mixture S = 24% by mass | 22.4 | 110 | 0.05 | 29.4 | 9.5 |

The results in Table 13 indicate that the degree of compression of the granulated product thus obtained decreased with the decrease of the mass ratio (S) of superheated steam in the dispersion element. When the mass ratio (S) of superheated steam was less than 24% by mass, the particle size of the granulated substance tends to vary. Thus, the mass ratio (S) of superheated steam is preferably 24% by mass or more.

(Examples 3-8 and 3-9)

In each of Examples 3-8 and 3-9, a granulated product was obtained in the same manner as in Example 3-1, except that the mass ratio (S) of superheated steam in the dispersion element, the amount of water added through the dispersion element, and the drying time were changed to the values shown in Table 14.

(Evaluation of granulated product)

The granulated products thus obtained were measured for the degree of compression in the same manner as above. Table 14 shows the measurements of the degree of compression. Table 14 also shows the channel temperature and channel pressure in the dispersion element generator.

(Table 14)

|  | Addition form of water | Amount of water added to 400 g of powder (g) | Channel temperature (°C) | Channel pressure (MPa) | Drying time (minute) | Degree of compression (%) |
|---|---|---|---|---|---|---|
| Example 3-8 | Vapor-liquid mixture S = 68% by mass | 22.4 | 120 | 0.10 | 29.4 | 16.4 |
| Example 3-9 | Vapor-liquid mixture S = 33% by mass | 22.4 | 120 | 0.10 | 29.4 | 13.6 |

The results in Table 14 indicate that the degree of compression of the granulated product thus obtained was not dependent only on the channel temperature and channel pressure in the dispersion element generator, but also on the mass ratio (S) of superheated steam.

DESCRIPTION OF THE REFERENCE NUMERALS

14 ... nozzle, 21 ... granulator, 31 ... superheated steam, 32 ... fine water droplets, 33 ... powder.

**Claims**

1. A granulating method for granulating powder (33) containing a water-soluble component, the method being **characterized by**:

   supplying only water into a channel (12) upstream of a nozzle (14) and then heating the water in the channel (12) in order to obtain a dispersion element composed of fine water droplets (32) dispersed in superheated steam (31);
   expelling the dispersion element from the nozzle (14); and, causing the dispersion element to contact the powder (33) in a flowing state to achieve granulation.

2. The granulating method according to claim 1, **characterized in that** the mass ratio of the superheated steam (31) contained in the dispersion element is adjusted in the range of 20 to 70% by mass in terms of the mass ratio determined from the theoretical flow rate of the superheated steam (31) expelled from the nozzle (14) and the actual flow rate of water fed to the nozzle (14).

3. The granulating method according to claim 1 or 2, **characterized by** using a fluidized bed granulator, a stirring granulator, or a continuous granulator.

4. The granulating method according to claim 1, **characterized by** using a fluidized bed granulator or a stirring granulator, wherein the mass ratio of the superheated steam (31) contained in the dispersion element is adjusted in the range of 23 to 63% by mass in terms of the mass ratio determined from the theoretical flow rate of the superheated steam (31) expelled from the nozzle (14) and the actual flow rate of water fed to the nozzle (14).

5. The granulating method according to claim 1, **characterized by** using a continuous granulator, wherein the mass ratio of the superheated steam (31) contained in the dispersion element is adjusted in the range of 24 to 68% by mass in terms of the mass ratio determined from the theoretical flow rate of the superheated steam (31) expelled from the nozzle (14) and the actual flow rate of water fed to the nozzle (14).

6. The granulating method according to claim 1, **characterized in that**
   the dispersion element is generated by a dispersion element generator (11) including the nozzle (14) and a heater (13) for heating the channel (12) for guiding water to the nozzle (14),
   the temperature in the channel (12) is from 105 to 150°C, the pressure in the channel (12) is from 0.01 to 0.30 MPa, and the dispersion element is expelled from the nozzle (14).

**Patentansprüche**

1. Granulierverfahren zum Granulieren von eine wasserlösliche Komponente enthaltendem Pulver (33), wobei das Verfahren durch Folgendes gekennzeichnet ist:

   Einleiten von lediglich Wasser in einen Kanal (12) stromaufwärts einer Düse (14) und dann Erhitzen des Wassers in dem Kanal (12) zum Erhalt eines Dispersionselements, das sich aus in überhitztem Wasserdampf (31) dispergierten feinen Wassertröpfchen (32) zusammensetzt;
   Ausstoßen des Dispersionselements aus der Düse (14) und Bewirken, dass das Dispersionselement zur Erzielung einer Granulierung mit dem Pulver (33) in einem fließenden Zustand in Kontakt gelangt.

2. Granulierverfahren nach Anspruch 1, **dadurch gekennzeichnet, dass** das Massenverhältnis des in dem Dispersionselement enthaltenen überhitzten Wasserdampfs (31) im Bereich von 20 bis 70 Masse-% hinsichtlich des aus der theoretischen Durchsatzrate des überhitzten Wasserdampfs (31), der aus der Düse (14) ausgestoßen wird, und der tatsächlichen Durchsatzrate von der Düse (14) zugeführtem Wasser bestimmten Massenverhältnisses angepasst wird.

**3.** Granulierverfahren nach Anspruch 1 oder 2, **gekennzeichnet durch** die Verwendung eines Wirbelbettgranulators, eines Rührgranulators oder eines Durchlaufgranulators.

**4.** Granulierverfahren nach Anspruch 1, **gekennzeichnet durch** die Verwendung eines Wirbelbettgranulators oder eines Rührgranulators, wobei das Massenverhältnis des in dem Dispersionselement enthaltenen überhitzten Wasserdampfs (31) im Bereich von 23 bis 63 Masse-% hinsichtlich des aus der theoretischen Durchsatzrate des überhitzten Wasserdampfs (31), der aus der Düse (14) ausgestoßen wird, und der tatsächlichen Durchsatzrate von der Düse (14) zugeführtem Wasser bestimmten Massenverhältnisses angepasst wird.

**5.** Granulierverfahren nach Anspruch 1, **gekennzeichnet durch** die Verwendung eines Durchlaufgranulators, wobei das Massenverhältnis des in dem Dispersionselement enthaltenen überhitzten Wasserdampfs (31) im Bereich von 24 bis 68 Masse-% hinsichtlich des aus der theoretischen Durchsatzrate des überhitzten Wasserdampfs (31), der aus der Düse (14) ausgestoßen wird, und der tatsächlichen Durchsatzrate von der Düse (14) zugeführtem Wasser bestimmten Massenverhältnisses angepasst wird.

**6.** Granulierverfahren nach Anspruch 1, **dadurch gekennzeichnet, dass**
das Dispersionselement durch einen Dispersionselementgenerator (11) erzeugt wird, der die Düse (14) und eine Heizvorrichtung (13) zum Erhitzen des Kanals (12) zum Leiten von Wasser zu der Düse (14) umfasst,
die Temperatur in dem Kanal (12) zwischen 105 und 150 °C beträgt, der Druck in dem Kanal (12) zwischen 0,01 und 0,30 MPa beträgt und das Dispersionselement aus der Düse (14) ausgestoßen wird.

**Revendications**

**1.** Procédé de granulation servant à granuler de la poudre (33) contenant un composant hydrosoluble, le procédé étant **caractérisé par** les étapes suivantes :

introduire uniquement de l'eau dans un canal (12) en amont d'une buse (14) et chauffer ensuite l'eau dans le canal (12) afin d'obtenir un élément sous forme de dispersion composé de fines gouttelettes d'eau (32) dispersées dans de la vapeur surchauffée (31) ;
expulser l'élément sous forme de dispersion par la buse (14) ; et faire en sorte que l'élément sous forme de dispersion vienne en contact avec la poudre (33) en écoulement afin de réaliser la granulation.

**2.** Procédé de granulation selon la revendication 1, **caractérisé en ce que** le rapport de masse de la vapeur surchauffée (31) contenue dans l'élément sous forme de dispersion est ajusté dans la plage de 20 à 70 % en masse en termes du rapport de masse déterminé à partir du débit théorique de la vapeur surchauffée (31) expulsée par la buse (14) et du débit réel de l'eau acheminée à la buse (14) .

**3.** Procédé de granulation selon la revendication 1 ou 2, **caractérisé par** l'utilisation d'un granulateur à lit fluidisé, d'un granulateur à agitation ou d'un granulateur continu.

**4.** Procédé de granulation selon la revendication 1, **caractérisé par** l'utilisation d'un granulateur à lit fluidisé ou d'un granulateur à agitation, dans lequel le rapport de masse de la vapeur surchauffée (31) contenue dans l'élément sous forme de dispersion est ajusté dans la plage de 23 à 63 % en masse en termes du rapport de masse déterminé à partir du débit théorique de la vapeur surchauffée (31) expulsée par la buse (14) et du débit réel de l'eau acheminée à la buse (14).

**5.** Procédé de granulation selon la revendication 1, **caractérisé par** l'utilisation d'un granulateur continu, dans lequel le rapport de masse de la vapeur surchauffée (31) contenue dans l'élément sous forme de dispersion est ajusté dans la plage de 24 à 68 % en masse en termes du rapport de masse déterminé à partir du débit théorique de la vapeur surchauffée (31) expulsée par la buse (14) et du débit réel de l'eau acheminée à la buse (14).

**6.** Procédé de granulation selon la revendication 1, **caractérisé en ce que**
l'élément sous forme de dispersion est généré par un générateur d'élément sous forme de dispersion (11) comprenant la buse (14) et un dispositif de chauffage (13) servant à chauffer le canal (12) afin de guider l'eau vers la buse (14), la température dans le canal (12) est comprise entre 105 et 150 °C, la pression dans le canal (12) est comprise entre 0,01 et 0,30 MPa et l'élément sous forme de dispersion est expulsé par la buse (14).

[FIG. 1]

[FIG. 2]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001062278 A
- JP 2007054679 A
- JP 2009091386 A
- US 5560896 A

**Non-patent literature cited in the description**

- *FOODS & FOOD INGREDIENTS JOURNAL,* 2008, vol. 213 (11), 969-976
- *Relationship between Coefficient of Discharge of Sonic Nozzle and Gas Type,* vol. 66 (98-1326), 438-444